# EUROPEAN PATENT APPLICATION

(11) **EP 3 957 851 A1**
(43) Date of publication of application: **23.02.2022**
(21) Application number: 20191334.0
(22) Date of filing: 17.08.2020
(51) Int. Cl.: F03D 7/02, F03D 13/25

(54) **CONTROLLING A FLOATING WIND TURBINE AT CRITICAL FREQUENCIES**

(71) Applicant: Siemens Gamesa Renewable Energy A/S, 7330 Brande (DK)
(72) Inventor: Esbensen, Thomas, 7400 Herning (DK); Gonzaga, Carlos A. C., 7100 Vejle (DK); Hoegh, Gustav, 7100 Vejle (DK)
(74) Representative: Aspacher, Karl-Georg

(57) **Abstract**

A method (500) for controlling the rotor speed of a floating wind turbine (101, 102, 103) including a floating foundation (120), a tower (130), a nacelle (160) and a wind rotor (140) having at least one wind blade, the method comprising the steps of:
- identifying (501) at least a first critical frequency (f1, f2 f3) of the floating wind turbine (101, 102, 103),
- calculating (502) a first plurality of critical rotor speeds (R11, R21, R31) of the wind rotor (140) respectively corresponding to each critical frequency (f1, f2, f3),
- calculating (503) at least a second plurality of critical rotor speeds (R12, R22, R32) of the wind rotor (140) by dividing each critical rotor speed (R11, R21, R31) of the first plurality of critical rotor speeds (R11, R21, R31) by a frequency coefficient (N),
- for each calculated critical rotor speed (R11, R21, R12, R22, R32) being lower than a maximum operational speed (Rmax) of the wind rotor (140) defining (504) a critical speed interval (T11, T21, T12, T22, T32) including the respective critical rotor speed (R11, R21, R12, R22, R32),
- operating (505) the wind rotor (140) at an operative rotor speed outside each defined critical speed interval (T11, T21, T12, T22, T32).

## Description

### Field of invention

The present invention relates to a controlling system and method for a floating wind turbine. Such controlling system and method operate the speed of the rotor of the floating wind turbine in such a way that operations at critical frequencies are avoided or minimized.

### Art Background

An offshore floating wind turbine comprises a floating platform supporting the wind turbine tower, nacelle and wind rotor.

Such type of wind turbines exhibits increased complexity as far as the control of critical frequencies is concerned, with respect of onshore installation or offshore installation having a fixed foundation provided on the seabed. The critical frequencies of a floating offshore wind turbine do not only include the same natural frequencies seen in the fixed-foundation setup, e.g. related to the tower and blade structural modes, but also the critical frequencies related to the translational and rotational motions of the floating platform supporting the wind turbine tower, nacelle and wind rotor. Such latter frequencies are known to be poorly damped depending on the operating conditions of the turbine.

Hence, there may be a need to provide a method and controlling system for efficiently controlling a floating wind turbine in such a way that operations at critical frequencies are avoided or minimized. This may be performed by efficiently controlling the speed of the rotor of the floating wind turbine.

### Summary of the Invention

This need may be met by the subject matter according to the independent claims. Advantageous embodiments of the present invention are described by the dependent claims.

According to a first aspect of the invention there is provided a method for controlling the rotor speed of a floating wind turbine. The floating wind turbine includes a floating foundation, a tower, a nacelle and a wind rotor having at least one wind blade. The method comprises the steps of:
- identifying at least a first critical frequency of the floating wind turbine,
- calculating a first plurality of critical rotor speeds of the wind rotor respectively corresponding to each critical frequency,
- calculating at least a second plurality of critical rotor speeds of the wind rotor by dividing each critical rotor speed of the first plurality of critical rotor speeds by a frequency coefficient,
- for each calculated critical rotor speed being lower than a maximum operational speed of the wind rotor defining a critical speed interval including the respective critical rotor speed,
- operating the wind rotor at an operative rotor speed outside each defined critical speed interval.

According to a second aspect of the invention there is provided a floating wind turbine including a floating foundation, a tower, a nacelle, a wind rotor having at least one wind blade, and a controller configured for executing the steps of the method above described.

As "maximum operational speed of the wind rotor" may be meant a predefined design speed on over-rated speed of the wind rotor. The first critical frequency may correspond to a translational or rotational natural frequency of the floating foundation or other component of the floating wind turbine or to a structural natural frequency of the tower or other component of the floating wind turbine.

According to embodiments of the present invention, a plurality of critical frequencies of the floating wind turbine are identified, when performing the step of identifying. The plurality of critical frequencies may include at least a first critical frequency corresponding to a translational or rotational natural frequency of the floating wind turbine and a second critical frequency corresponding to a first structural natural frequency of the tower. A third critical frequency may be identified, which corresponds to a second structural natural frequency of the tower or to a second translational or rotational natural frequency of floating wind turbine.

The described controlling method permits to ensure that the rotor speed does not coincide with the critical frequencies, including critical frequencies depending on the periodic natural motion of the floating wind turbine. The objective is achieved by computing multiple rotor critical speed intervals, which are to be avoided when operating the floating wind turbine. In cases when this is not possible due to other operational constraints, the permanence of the rotor speed within the critical speed intervals is to be minimized. Rotor speed control strategies may be used to adjust controller handles such electrical power or torque and/or blade actuation through blade pitch angles and/or blade add-ons actuation, in order to avoid that the actual rotor rotational speed is within the critical speed intervals. The present invention avoids damages to the floating wind turbine and optimizes power generation by avoiding that the rotor speed is comprised in the critical speed intervals. The excitation of tower natural modes may induce oscillations with very high amplitude, which can cause turbines shutdown, reducing availability and ultimately causing serious and irreversible damage to the turbine structure.

According to embodiments of the present invention, the method may adjust changes in critical frequencies. The frequencies may be estimated periodically using a single or a plurality of measurement(s) of displacement and/or speed and/or acceleration of the tower and the floating foundation. Alternatively, the frequencies may be estimated continuously.

The motion of the floating wind turbine as a single rigid object may be divided into six individual degrees of freedom, namely three translational ones, i.e. a surge, a sway and a heave, and three rotational ones, i.e. a floater roll, a floater pitch and a floater yaw. In a step of the method of the present invention a first critical frequency may be identified, which corresponds to a translational or rotational natural frequency of the floating wind turbine. The first critical frequency depends in general on such natural motions of the floating wind turbine, the translational motions normally having a natural frequency of about 0.005 Hz and the rotational motions normally having a natural frequency ranging in an interval of about 0.02 Hz to 0.04 Hz. A first and a second critical frequency may be identified respectively corresponding to translational and rotational frequencies of the floating wind turbine. Alternatively, a second critical frequency may be identified, which corresponds to a first structural natural frequency of the tower. Additionally, a third critical frequency may be identified, which corresponds to a second structural natural frequency of the tower or to a further natural motion of the floating wind turbine. The range of frequencies for the tower natural mode are usually in an interval of about 0.02 Hz to 0.04 Hz. Structural natural frequencies of the tower may be calculated considering the assembly comprising the tower, the nacelle and the wind rotor.

According to embodiments of the present invention, the second critical frequency is calculated for a first configuration of the tower where the structural natural frequency collides with the rotor speed and the third critical frequency is calculated for a second configuration of the tower where the structural natural frequency collides with the rotor speed multiplied by a frequency coefficient. The frequency coefficient may be comprised between 2 and 5, for example it may be 3. According to other embodiments of the present invention, more than two critical frequency respectively corresponding to more than two configurations of the tower may be considered. The configurations of the tower and therefore the respective critical frequencies may depend on stiffness parameters of the tower, for example the dimensions of the tower along and perpendicular to its axis and the material of the tower.

In a cartesian graph where the x-axis shows the rotor speed R in RPM (revolutions per minute) and the y-axis shows the frequencies f in Hz, the first configuration of the tower is identified by a first line f=R/60 and the second configuration of the tower is identified by the second line f=N*R/60, where N is the frequency coefficient. The first line corresponds to the specific case where N=1. In embodiments where more than two configurations of the tower are considered, more than two respective lines may be considered in the above defined cartesian graph, each line being characterized by a receptive value of the frequency coefficient.

The first plurality of critical rotor speeds of the wind rotor respectively corresponding to the plurality of critical frequencies may be calculated by determining the abscissa of points on the first line, i.e. Ri=60*fi. The second plurality of critical rotor speeds of the wind rotor may correspond to points on the second line. In embodiments where more than two lines on the above defined cartesian graph are considered further pluralities of critical rotor speeds of the wind rotor may be calculated according to same principles above described.

Once a critical rotor speed is calculated, if such speed is lower than a predefined design speed of the wind rotor defining a critical speed interval is defined including the respective critical rotor speed.

According to embodiments of the present invention, each critical speed interval includes the respective critical rotor speed as mid value. Each critical speed interval may be obtained by adding and subtracting an interval amplitude to the respective critical rotor speed. The interval amplitude may be a fixed parameter, or it may be a fraction of the critical rotor speed. The interval amplitude may be a parameter, which is automatically adjusted during operations.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a plurality of floating wind turbines.
- Figure 2: shows a more detailed view of one floating wind tur-bine of Fig. 1.
- Figure 3: shows a graph illustrating steps and results of a method for controlling the rotor speed of a floating wind turbine according to the present invention.
- Figure 4: shows a flow diagram illustrating a sequence of steps the method of Fig. 3.

### Detailed Description

The illustrations in the drawings are schematic. It is noted that in different figures, similar or identical elements are provided with the same reference signs.

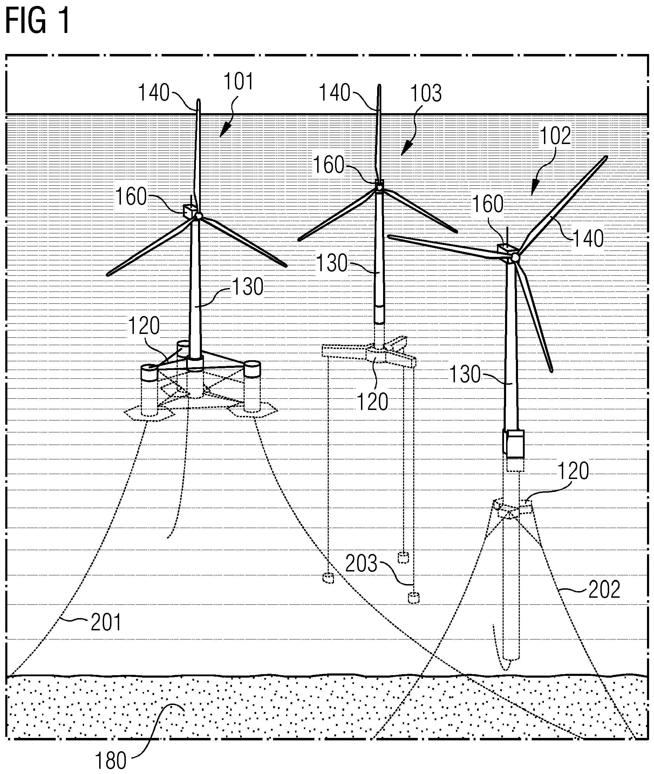

**Figure 1** shows three floating wind turbine 101, 102, 103 according to respective exemplary embodiments of the present invention. Each of the floating wind turbines 101, 102, 103 comprises a wind rotor 140 having three wind and blades mounted on a nacelle 160. The nacelle 160 is mounted on a tower 130 attached to a floating foundation 120. Each of the floating wind turbines 101, 102, 103 comprises a respective mooring system 201, 202, 203 for connecting the floating foundation 120 to a seabed 180. The first floating wind turbine 101 comprises a floating foundation 120 of the barge type with a first mooring system 201 of the catenary type. The second floating wind turbine 102 comprises a floating foundation 120 of the spar-buoy type with a second mooring system 202 of the catenary type. The third floating wind turbine 103 comprises a floating foundation 120 of the tension leg type with a third tension leg mooring system 203. According to other embodiments of the invention (not shown), other combinations of floating foundation 120 and mooring system 200 may be possible according to the present invention.

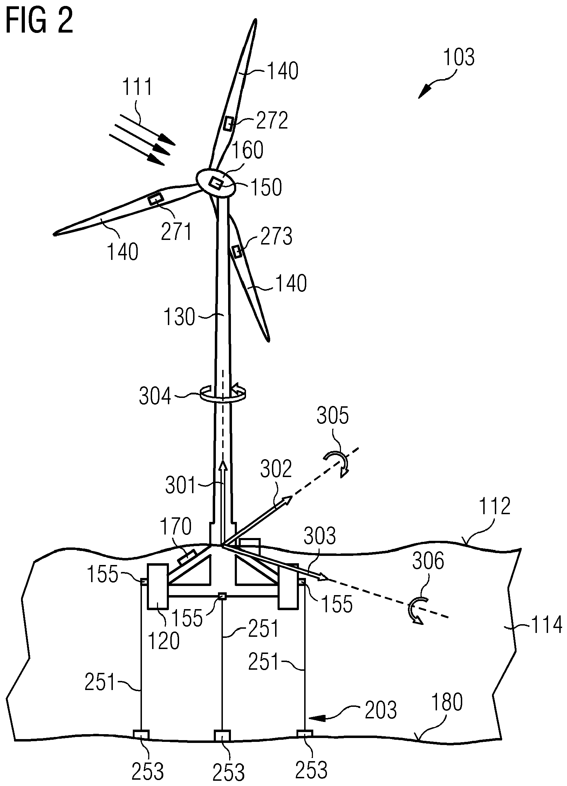

**Figure 2** shows in more detail the floating wind turbine 103. The above description may be applied to other embodiments of floating wind turbines, for example to the floating wind turbines 101 and 102 of figure 1. The floating wind turbine 103 floats in the sea water 114 and is held in position by the mooring system 203, which includes three tension leg mooring lines 251. The floating foundation 120 is fixed the mooring lines 251 in such a manner that the floating foundation 120 is dunked into sea water 114 under a sea surface 112. An incoming wind field 111 acts on the wind rotor 140 of the floating wind turbine 103 such that electrical energy may be generated by the floating wind turbine 103. The floating wind turbine 103 includes an electrical generator 150 inside the nacelle 160 for transforming the rotational energy of the three blades of the wind rotor 140 into electrical energy. Each mooring line 251 is fixed to the floating foundation 120 by a mooring line fixation 155 and to a seabed 180 by an anchor 253. The floating wind turbine 103 has six individual degrees of freedom in which the floating wind turbine 103 may move. Namely, three translational positions, i.e. a surge 303, a sway 302 and a heave 301, and three rotational angles, i.e. a floater roll 306, a floater pitch 305 and a floater yaw 304. The floating wind turbine 103 comprises a blade load sensor 271, a wind speed sensor 272 and a wind direction sensor 273 each mounted on one of the blades 140 or the nacelle 160. Alternatively or additionally, other sensors may be present on the floating wind turbine 103, for example an accelerometer and/or an inclination sensor and/or a wave radar mounted on any of the nacelle 160 and/or the blade 140 and/or the tower 130 and/or the floating foundation 120. The sensors 271, 272, 273 measure respective operational variables, which can be associated with the position and orientation of the floating wind turbine 103. For example, the measured values may be associate with a floater roll 106 and/or a floater pitch 105 and/or a floater yaw 104. The floating wind turbine 103 comprises a controller 170 configured for executing the method for controlling the speed of the wind rotor 140 as below described.

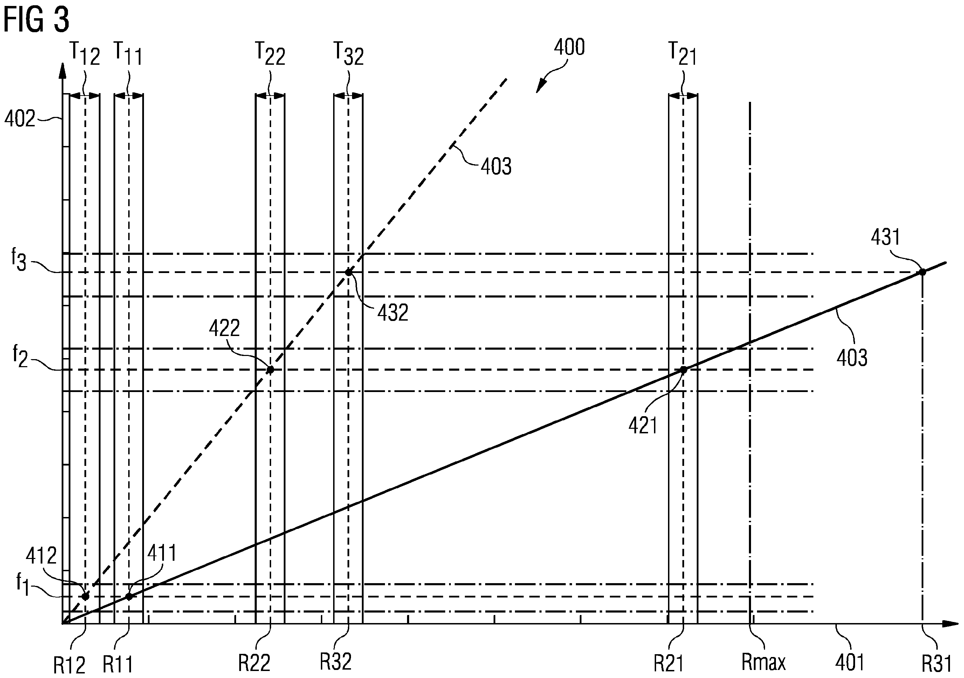

**Figure 3** shows a cartesian graph 400 illustrating steps and results of a method according to the present invention. The cartesian graph 400 includes an x-axis 401 representing the speed R of the wind rotor 140 and a y-axis 402 representing the natural frequency f of the floating wind turbine 101, 102, 103. The speed R of the wind rotor 140 may be given in RPM (revolutions per minute) while the critical frequency f may be given in Hz. The cartesian graph 400 includes a first line 403 passing through the origin of the x-axis 401 and the y-axis 402. The first line 403 represents a first configuration of the tower 120 where the natural frequency f collides with the rotor speed R. Along the first line 403 the natural frequency f is proportional to the rotor speed R, a coefficient of proportionality depending on measurement units. If the speed R of the wind rotor 140 is given in RPM (revolutions per minute) and the critical frequency f is given in Hz, then along the first line 403 the following formula applies: f=R/60. The cartesian graph 400 includes a second line 404 passing through the origin of the x-axis 401 and the y-axis 402. The second line 404 represents a second configuration of the tower 120 where the natural frequency f collides with the rotor speed R multiplied by a frequency coefficient N. The frequency coefficient N may be an integer, for example having the value 3. Along the second line 404 the natural frequency f is proportional to the rotor speed R, a coefficient of proportionality depending on measurement units and the frequency coefficient N. If the speed R of the wind rotor 140 is given in RPM (revolutions per minute) and the critical frequency f is given in Hz, then along the second line 404 the following formula applies: f=N*R/60. On the cartesian graph 400 a plurality of critical frequencies f1, f2 f3 of the floating wind turbine 101, 102, 103 are identified. The plurality of critical frequencies f1, f2 f3 includes a first critical frequency f1 corresponding to a translational or rotational natural frequency of the floating wind turbine 101, 102, 103, a second critical frequency f2 corresponding to a first structural natural frequency of the tower 130 and a third critical frequency f3 corresponding to a second structural natural frequency of the tower 130. The plurality of critical frequencies f1, f2, f3 identifies a first plurality of respective points 411, 421, 431 on the first line 403, each being characterized by a respective critical frequency f1, f2, f3 and a respective first plurality critical rotor speed R11, R21, R31. The plurality of critical frequencies f1, f2, f3 identifies a second plurality of respective points 412, 422, 432 on the second line 404, each being characterized by a respective critical frequency f1, f2, f3 and a respective second plurality of critical rotor speed R12, R22, R32. For each critical rotor speed R11, R21, R12, R22, R32 being lower than a predefined design speed Rmax of the wind rotor 140 a respective critical speed interval T11, T21, T12, T22, T32 is defined including the respective critical rotor speed R11, R21, R12, R22, R32. The design speed Rmax is the maximal speed of the wind rotor 140, therefore critical rotor speeds above the design speed Rmax has no practical effect on the floating wind turbine 101, 102, 103.

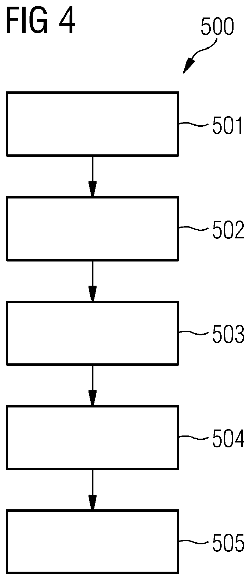

**Figure 4** shows a flow diagram a method 500 according to the present invention. The method 500 comprises:
- a first step 501 of identifying the plurality of critical frequencies f1, f2 f3 including the first critical frequency f1 corresponding to a translational or rotational natural frequency of the floating wind turbine 101, 102, 103, the second critical frequency f2 corresponding to a first structural natural frequency of the tower 130 and the third critical frequency f3 corresponding to a second structural natural frequency of the tower 130,
- a second step 502 of calculating the first plurality of critical rotor speeds R11, R21, R31,
- a third step 503 of calculating the second plurality of critical rotor speeds R12, R22, R32 of the wind rotor 140 by dividing each critical rotor speed R11, R21, R31 of the first plurality of critical rotor speeds by the frequency coefficient N,
- a fourth step 504 of defining the critical speed interval T11, T21, T12, T22, T32, for each calculated critical rotor speed R11, R21, R12, R22, R32 below the predefined design speed Rmax,
- a fifth step 504 of operating the wind rotor 140 at an operative rotor speed outside each defined critical speed interval T11, T21, T12, T22, T32.

In the embodiment of the attached figures 3 and 4, each critical speed interval T11, T21, T12, T22, T32 is obtained by adding and subtracting an interval amplitude to the respective critical rotor speed R11, R21, R12, R22, R32. The interval amplitude may be a fixed parameter, for example a predefined fixed parameter, which is the same for each critical speed interval T11, T21, T12, T22, T32. Alternatively, the interval amplitude may be different for each critical speed interval T11, T21, T12, T22, T32, for example being a fraction of the respective critical rotor speed R11, R21, R12, R22, R32.

## Claims

1. A method (500) for controlling the rotor speed of a floating wind turbine (101, 102, 103) including a floating foundation (120), a tower (130), a nacelle (160) and a wind rotor (140) having at least one wind blade, the method comprising the steps of:
- identifying (501) at least a first critical frequency (f1, f2 f3) of the floating wind turbine (101, 102, 103),
- calculating (502) a first plurality of critical rotor speeds (R11, R21, R31) of the wind rotor (140) respectively corresponding to each critical frequency (f1, f2, f3),
- calculating (503) at least a second plurality of critical rotor speeds (R12, R22, R32) of the wind rotor (140) by dividing each critical rotor speed (R11, R21, R31) of the first plurality of critical rotor speeds (R11, R21, R31) by a frequency coefficient (N),
- for each calculated critical rotor speed (R11, R21, R12, R22, R32) being lower than a maximum operational speed (Rmax) of the wind rotor (140) defining (504) a critical speed interval (T11, T21, T12, T22, T32) including the respective critical rotor speed (R11, R21, R12, R22, R32),
- operating (505) the wind rotor (140) at an operative rotor speed outside each defined critical speed interval (T11, T21, T12, T22, T32).

2. The method (500) according to the claim 1, wherein a plurality of critical frequencies (f1, f2 f3) of the floating wind turbine (101, 102, 103) are identified in the step of identifying (501), the plurality of critical frequencies (f1, f2 f3) including at least a first critical frequency (f1) corresponding to a translational or rotational natural frequency of the floating wind turbine (101, 102, 103) and a second critical frequency (f2) corresponding to a first structural natural frequency of the tower (130).

3. The method (500) according to the claim 2, wherein a third critical frequency (f3) is identified corresponding to a second structural natural frequency of the tower (130) or to a second translational or rotational natural frequency of the floating wind turbine (101, 102, 103).

4. The method (500) according to the claim 2 or 3, wherein the second critical frequency (f2) is calculated for a configuration of the tower where the structural natural frequency collides with the rotor speed and the third critical frequency (f3) is calculated for a configuration of the tower where the structural natural frequency collides with the rotor speed multiplied by the a frequency coefficient (N).

5. The method (500) according to any of the previous claim, wherein each critical speed interval (T11, T21, T12, T22, T32) includes the respective critical rotor speed (R11, R21, R12, R22, R32) as mid value.

6. The method (500) according to claim 5, wherein each critical speed interval (T11, T21, T12, T22, T32) is obtained by adding and subtracting an interval amplitude to the respective critical rotor speed (R11, R21, R12, R22, R32).

7. The method (500) according to claim 6, wherein the interval amplitude is a fixed parameter.

8. The method according to claim 6, wherein the interval amplitude is a fraction of the critical rotor speed (R11, R21, R12, R22, R32).

9. The method (500) according to any of the previous claim, wherein the frequency coefficient (N) is comprised between 2 and 5.

10. The method (500) according to any of the previous claim, wherein the critical frequencies (f1, f2, f3) are estimated.

11. The method (500) according to any of the previous claim, wherein the frequencies (f1, f2, f3) are estimated using measurements in displacement and/or speed and/or acceleration of floating foundation (120) or the tower (130).

12. A floating wind turbine (101, 102, 103) including a floating foundation (120), a tower (130), a nacelle (160), a wind rotor (140) having at least one wind blade, and a controller configured for executing the steps of the method (500) according to any of the previous claims.

13. The floating wind turbine (101, 102, 103) according to claim 12, wherein the floating wind turbine (101, 102, 103) further includes a at least a sensor (271, 272, 273) for measuring displacement and/or speed and/or acceleration of floating foundation (120) or the tower (130).
